(19) **Europäisches Patentamt European Patent Office Office européen des brevets**

(11) **EP 1 384 163 B1**

(12) **EUROPEAN PATENT SPECIFICATION**

(45) Date of publication and mention
of the grant of the patent:
**18.04.2007 Bulletin 2007/16**

(21) Application number: **00952285.5**

(22) Date of filing: **31.07.2000**

(51) Int Cl.:
**G06F 17/30** *(2006.01)*    **G06Q 10/00** *(2006.01)*

(86) International application number:
**PCT/US2000/020685**

(87) International publication number:
**WO 2001/009753 (08.02.2001 Gazette 2001/06)**

(54) **METHOD AND SYSTEM FOR PRIORITIZED ALERTS**

VEFAHREN UND VORRICHTUNG FÜR PRIORISIERTE MELDUNGEN

GENERATION ET ACHEMINEMENT D'AVERTISSEMENTS CLASSES PAR ORDRE DE PRIORITE

(84) Designated Contracting States:
**AT BE CH CY DE DK ES FI FR GB GR IE IT LI LU MC NL PT SE**
Designated Extension States:
**AL LT LV MK RO SI**

(30) Priority: **30.07.1999 US 364527**
**30.07.1999 US 365293**
**30.07.1999 US 364528**
**30.07.1999 US 364522**

(43) Date of publication of application:
**28.01.2004 Bulletin 2004/05**

(73) Proprietor: **MICROSOFT CORPORATION**
**Redmond, WA 98052 (US)**

(72) Inventors:
• **HORVITZ, Eric, J.**
**Kirkland, WA 98033 (US)**
• **JACOBS, Andrew, W.**
**Seattle, WA 98118 (US)**

(74) Representative: **Grünecker, Kinkeldey, Stockmair & Schwanhäusser Anwaltssozietät Maximilianstrasse 58 80538 München (DE)**

(56) References cited:
**WO-A-98/00787**          **US-A- 5 493 692**

• **LOSEE R M: "MINIMIZING INFORMATION OVERLOAD: THE RANKING OF ELECTRONIC MESSAGES" JOURNAL OF INFORMATION SCIENCE, XX, XX, vol. 15, 1989, pages 179-189, XP000775831 ISSN: 1352-7460**
• **JOACHIMS T: "Text categorization with support vector machines: learning with many relevant features" MACHINE LEARNING. EUROPEAN CONFERENCE ON MACHINE LEARNING. PROCEEDINGS, XX, XX, 21 April 1998 (1998-04-21), pages 137-142, XP002119808**

**Description**

**TECHNICAL FIELD**

This invention relates generally to text documents such as email messages, and more particularly to the prioritization of such documents by measures of importance.

**BACKGROUND ART**

Electronic mail programs have become a popular application among computer users. Especially with the advent of the Internet, exchanging email has almost become a reason why people purchase computers for personal reasons, and within many corporate environments, email has become the standard manner by which coworkers exchange information. However, with the increasing popularity of email, shortcomings have become apparent.

Chief among these shortcomings is that many users now face a deluge of email every day, such that the capability of being able to send and receive email has almost become a hindrance to their day-to-day ability to get their job done, as opposed to being an asset. Some users report receiving over 100 email messages a day. With such large numbers of email, it is difficult to manage the email, such that the users read the most important messages first.

Limited solutions to this problem have been attempted in the prior art. Prior art exists for attempting to curtail me amount of junk email- e.g., unsolicited email, typically regarding a service or product for sale - that users receive. Moreover, some electronic mail programs allow for the generation of rules that govern how an email is managed within the program - for example, placing all emails from certain coworkers in a special folder.

These limited solutions, however, do not strike at the basic problem behind email - that with so much email being received, it would be most useful for a user to be able to have his or her computer automatically prioritize the email by importance or review urgency, and perform actions based on that prioritization. For these and other reasons, there is a need for the present invention.

R.M. Losee, "Minimizing information overload; the ranking of electronic messages", Journal of Information Science, vol. 15, 1989, pp. 179-189 describes an electronic message ranking technique where unexamined messages are ranked from highest expected worth to lowest expected worth and presented to the user.

T. Joachim, "Text categorization with support vector machines: learning with many relevant features", European Conference on Machine Learning, 21 April 1998, pp. 37 to 142 describes a technique for text categorization with support vector machines.

WO-98/00787-A describes an electronic mail system for receiving and forwarding e-mail messages based on subscriber supplied criteria.

**DISCLOSURE OF INVENTION**

It is the object of the invention to provide a computer-implemented method and a corresponding computerized system capable of improving the prioritization of text such as e-mail messages.

This object is solved by the invention as claimed in the independent claims.

Preferred embodiments are specified in the dependent claims.

The invention relates to prioritizing text such as email messages. In one embodiment, a computer-implemented method first receives a text. The method generates a priority of the text, based on a text classifier such as a Bayesian classifier or a support-vector machine classifier. The method then outputs the priority. In one embodiment, the user is alerted based on a cost-benefit analysis of alerting, considering the priority of a given message. That is, in one embodiment, the method includes alerting the user based on an expected loss of non-review of the text as compared to an expected cost of alerting the user of the text, at a current time. Alerts can be conveyed to an electronic device, or displayed on a display of a computer. The text may also be routed.

Embodiments of the invention provide for advantages over the prior art. A user, for example, in one embodiment, may ask that he or she only be disturbed or alerted if the priority of the text is greater than a given threshold. Thus, even if the user receives over 100 different emails, he or she will be alerted to the most important email, and then will be able to deal with the other email when the user has time. Prioritization, in other words, makes email much more useful in environments where a lot of email is exchanged on a regular basis.

Embodiments of the invention include computer-implemented methods, computer-readable media, and computerized systems of varying embodiments. Still other embodiments, advantages, and aspects of the invention will become apparent by reading the following detailed description, and by reference to the drawings.

Embodiments of the invention may include determining an expected loss of non-review by determining a likelihood that a user will review the text at future time. That is, the expected loss of non-review may account for a likelihood that a user will review the text at a future time.

FIG. 1 is a diagram of an operating environment in conjunction with which embodiments of the invention may be practiced;

FIG.2 is a diagram showing explicit and implicit training of a text classifier, according to an embodiment of the invention;

FIG. 3 is a diagram showing how a priority for a text is generated by input to a text classifier, according to an embodiment of the invention;

FIG. 4(a) is a diagram of a scheme according to which the priority of a text can be classified, according to an embodiment of the invention;

FIG. 4(b) is a diagram of another scheme according to which the priority of a text can be classified, according to another embodiment of the invention;

FIG. 5(a) is a graph showing linear cost functions of high, medium, and low priority texts, according to an embodiment of the invention;

FIG. 5(b) is a graph showing a non-linear cost function for a text, according to an embodiment of the invention;

FIG. 6 is a diagram showing classes of evidence that can be used to make an inference about a user's activity (e.g., if a user is present), according to one embodiment of the invention;

FIG. 7 is a diagram showing a Bayesian network that can be used for inferring a user's activity (e.g., if a user is present), according to one embodiment of the invention;

FIGs. 8-10 are influence diagrams showing how in one embodiment decision models can be utilized to make the decision as to how and when to alert a user to a message;

FIG. 11 is a flowchart of a method according to an embodiment of the invention;

FIG. 12 is a diagram of a system according to an embodiment of the invention;

FIG. 13(a) is a diagram of a system according to another embodiment of the invention;

FIG. 13(b) is a diagram of a system according to another embodiment of the invention;

FIG. 13(c) is a diagram of a system according to another embodiment of the invention;

FIG. 14(a) is a diagram of a user interface via which alert criteria can be modified, according to an embodiment of the invention;

FIGs. 14(b) and 14(c) are diagrams of a user interface via which routing criteria can be modified, according to an embodiment of the invention; and,

FIG. 14(d) is a diagram of a user interface via which predetermined criteria for alerting can be modified, according to another embodiment of the invention.

## MODE(S) FOR CARRYING OUT INVENTION

In the following detailed description of exemplary embodiments of the invention, reference is made to the accompanying drawings, which form a part hereof, and in which is shown by way of illustration specific exemplary embodiments in which the invention may be practiced. These embodiments are described in sufficient detail to enable those skilled in the art to practice the invention, and it is to be understood that other embodiments may be utilized and that logical, mechanical, electrical, and other changes may be made without departing from the spirit or scope of the present invention. The following detailed description is, therefore, not to be taken in a limiting sense, and the scope of the present invention is defined only by the appended claims.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. (It is noted that the terms document and text are used interchangeably herein and should be construed as interchangeable as well.)

It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as processing or computing or calculating or determining or displaying or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

**Operating Environment**

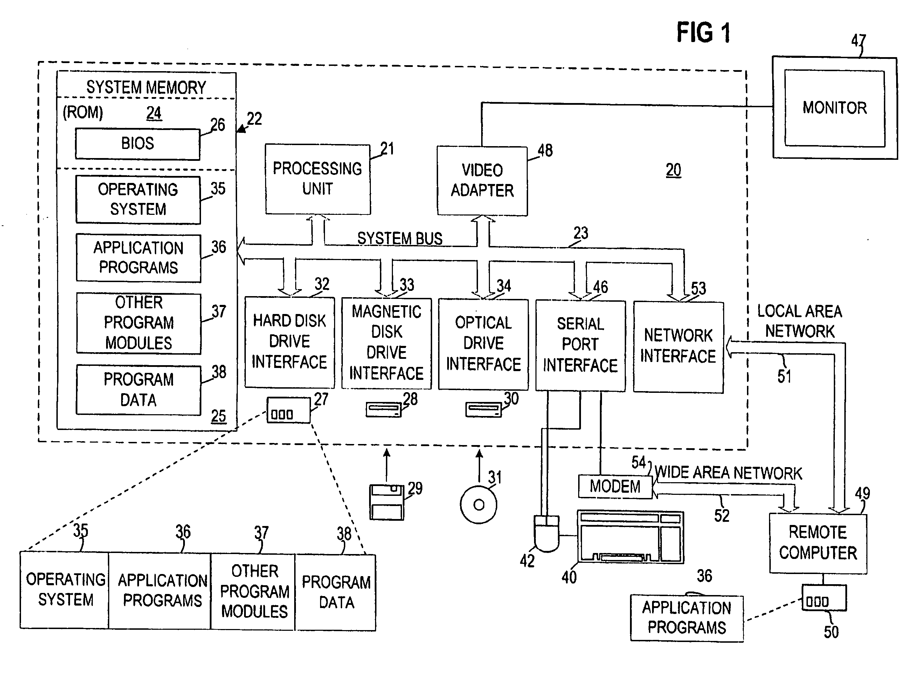

Referring to FIG. 1, a diagram of the hardware and operating environment in conjunction with which embodiments of the invention may be practiced is shown. The description of FIG. I is intended to provide a brief, general description of suitable computer hardware and a suitable computing environment in conjunction with which the invention may be implemented. Although not required, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PC's, minicomputers, mainframe computers, and the like. The invention may also be practiced in distributed computing environments where tasks are performed by remote processing devices that are linked through a communications network. In a distributed computing environment, program modules may be located in both local and remote memory storage devices.

The exemplary hardware and operating environment of FIG. 1 for implementing the invention includes a general purpose computing device in the form of a computer 20, including a processing unit 21, a system memory 22, and a system bus 23 that operatively couples various system components include the system memory to the processing unit 21. There may be only one or there may be more than one processing unit 21, such that the processor of computer 20 comprises a single central-processing unit (CPU), or a plurality of processing units, commonly referred to as a parallel processing environment. The computer 20 may be a conventional computer, a distributed computer, or any other type of computer; the invention is not so limited.

The system bus 23 may be any of several types of bus structures including a memory bus or memory controller, a peripheral bus, and a local bus using any of a variety of bus architectures. The system memory may also be referred to as simply the memory, and includes read only memory (ROM) 24 and random access memory (RAM) 25. A basic input/output system (BIOS) 26, containing the basic routines that help to transfer information between elements within the computer 20, such as during start-up, is stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated computer-readable media provide nonvolatile storage of computer-readable instructions, data structures, program modules, and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), and the like, may be used in the exemplary operating environment.

A number of program modules may be stored on the hard disk, magnetic disk 29, optical disk 31, ROM 24, or RAM 25, including an operating system 35, one or more application programs 36, other program modules 37, and program data 38. A user may enter commands and information into the personal computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port, or a universal serial bus (USB). A monitor 47 or other type of display device is also connected to the system bus 23 via an interface, such as a video adapter 48. In addition to the monitor, computers typically include other peripheral output devices (not shown), such as speakers and printers.

The computer 20 may operate in a networked environment using logical connections to one or more remote computers, such as remote computer 49. These logical connections are achieved by a communication device coupled to or a part of the computer 20; the invention is not limited to a particular type of communications device. The remote computer 49 may be another computer, a server, a router, a network PC, a client, a peer device or other common network node, and typically includes many or all of the elements described above relative to the computer 20, although only a memory storage device 50 has been illustrated in FIG. 1. The logical connections depicted in FIG. 1 include a local-area network (LAN) 51 and a wide-area network (WAN) 52. Such networking environments are commonplace in office networks, enterprise-wide computer networks, intranets and the Internal, which are all types of networks.

When used in a LAN-networking environment, the computer 20 is connected to the local network 51 through a network interface or adapter 53, which is one type of communications device. When used in a WAN-networking environment, the computer 20 typically includes a modem 54, a type of communications device, or any other type of communications device for establishing communications over the wide area network 52, such as the Internal. The modem 54, which may be internal or external, is connected to the system bus 23 via the serial port interface 46. In a networked environment, program modules depicted relative to the personal computer 20, or portions thereof, may be stored in the remote memory storage device. It is appreciated that the network connections shown are exemplary and other means of and communications devices for establishing a communications link between the computers may be used.

Generating Measures for Prioritization of Text Documents

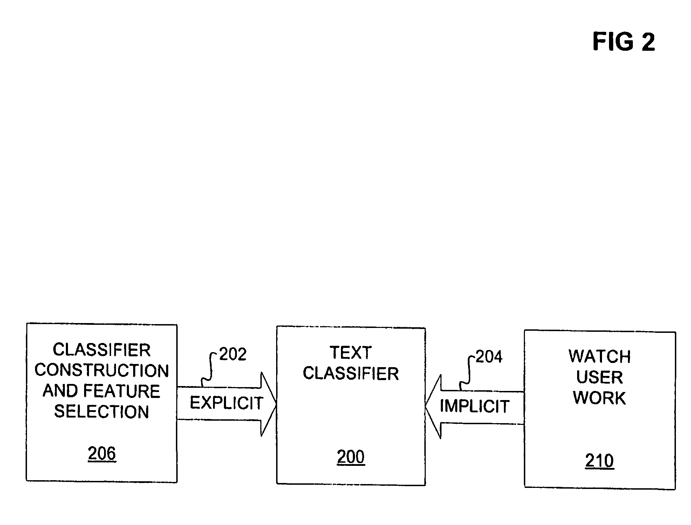

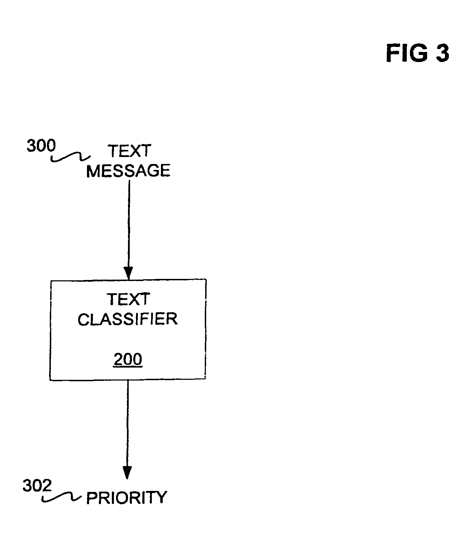

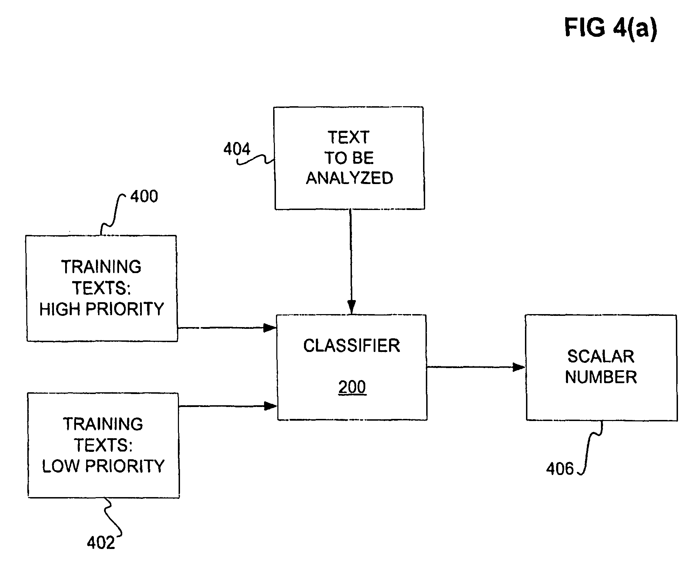

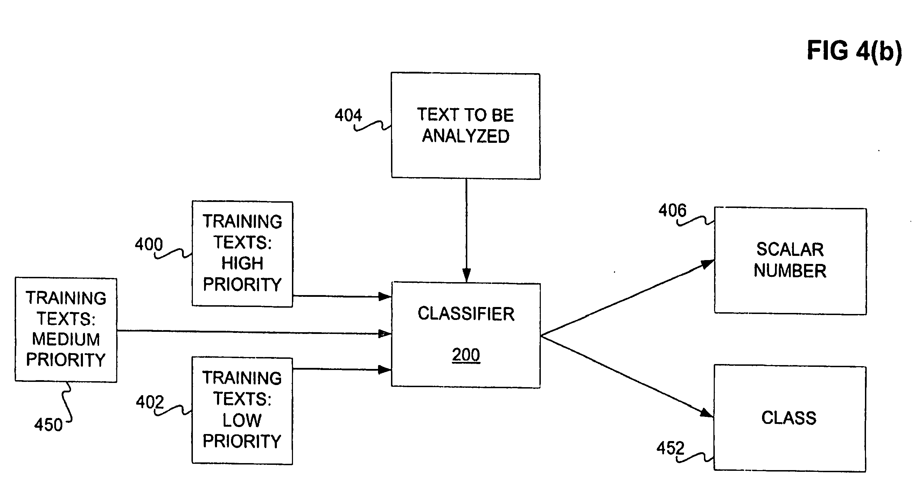

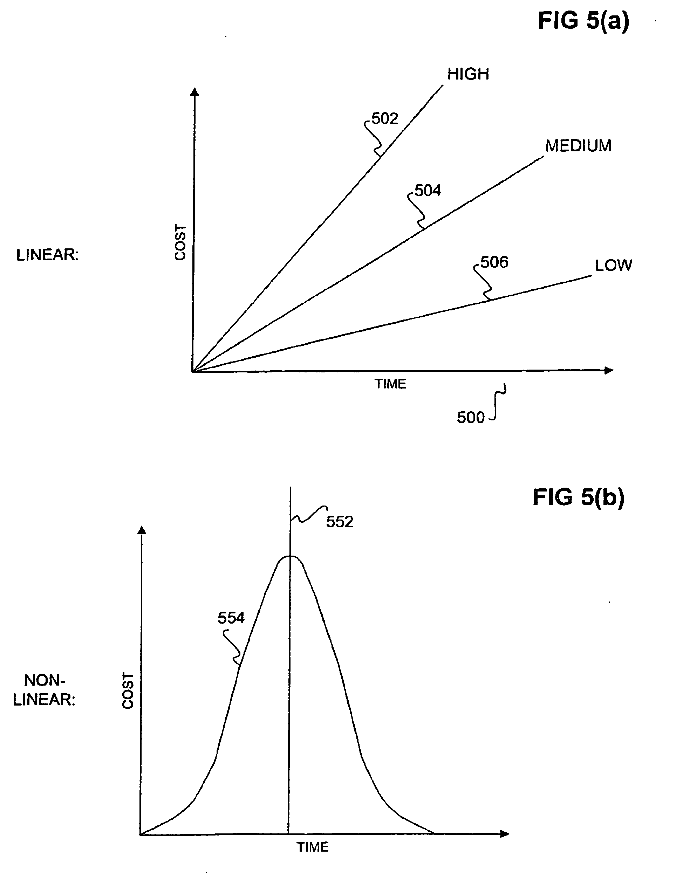

In this section of the detailed description, the generation of a priority for text documents such as an email, according to one embodiment of the invention, is described. The generation of priorities for texts as described can then be used in methods, systems, and computer-readable media (as well as other embodiments) of the invention as are presented in other sections of the detailed description. The description in this section is provided in conjunction with FIG. 2 and FIG. 3, the former which is a diagram showing explicit and implicit training of a text classifier, according to an embodiment of the invention, and the latter which is a diagram showing how a priority for a text is generated by input to a text classifier, according to an embodiment of the invention. The description is also provided in conjunction with FIGs. 4(a) and 4(b), which are diagrams of different schema according to which the priority of a text can be classified, and in conjunction with FIGs. 5(a) and 5(b), which are graphs showing different cost functions that may be applicable depending on text type.

Referring first to FIG. 2, the text classifier 200 can be trained both explicitly, as represented by the arrow 202, and implicitly, as represent by the arrow 204. The explicit training represented by the arrow 202 is usually conducted at the initial phases of constructing the text classifier 200, while the implicit training represented by the arrow 204 is usually conducted after the text classifier 200 has been constructed, to fine tune the classifier 200. However, the invention is not so limited.

The text classifier 200 in one embodiment is a Bayesian classifier, as known within the art, while in another embodiment it is a support vector machine (SVM) classifier, as also known within the art Text classification methodology based on a Bayesian learning approach is specifically described in the reference M. Sahami, S. Dumais, D. Heckerman, E. Horvitz, A Bayesian Approach to Junk E-Mail Filtering, AAAI Workshop on Text Classification, July 1998, Madison, Wisconsin, AAAI Technical Report WS-98-05. Text classification methodology based on an SVM approach is specifically described in the following references: the coassigned patent, U.S. Pat. No. 5,864,848, issued January 26, 1999; the previously filed and coassigned case entitled "Methods and Apparatus for Building a Support Vector Machine Classifier," serial no. 09/055,477, filed on April 6, 1998, published as US Patent no. 6 327 581 and, the reference J. Platt, Fast Training of Support Vector Machines using Sequential Minimal Optimization, MIT Press, Baltimore, MD, 1998. For purposes of this application, specific description is made with reference to an SVM classifier, although those of ordinary skill within the art can appreciate that the invention is not so limited. Other text classification approaches include Bayesian networks, decision trees, and probabilistic classification models assuming different patterns of independence. Text classification as used herein also is inclusive of statistical regression that is used to develop models of priority.

As shown in FIG. 2, the explicit training of the text classifier 200 as represented by the arrow 202 includes constructing the classifier in 206, including utilizing feature selection. In general, Support Vector Machines build classifiers by identifying a hyperplane that separates a set of positive and negative examples with a maximum margin. In the linear form of SVM that is employed in one embodiment, the margin is defined by the distance of the hyperplane to the nearest positive and negative cases for each class. Maximizing the margin can be expressed as an optimization problem. A post-processing procedure described in the Platt reference is used that employs regularized maximum likelihood fitting to produce estimations of posterior probabilities. The method fits a sigmoid to the score that is output by the SVM classifier.

In the explicit training, the text classifier is presented with both time-critical and non-time-critical texts (e.g., email messages), so that it may be able to discriminate between the two. This training set may be provided by the user, or a standard training set may be used. Given a training corpus, the text classifier first applies feature-selection procedures that attempt to find the most discriminatory features. This process employs a mutual-information analysis. Feature selection can operate on single words or higher-level distinctions made available, such as phrases and parts of speech tagged with natural language processing - that is, the text classifier 200 is able to be seeded with specially tagged text to discriminate features of a text that are considered important.

Feature selection for text classification typically performs a search over single words. Beyond the reliance on single words, domain-specific phrases and high-level patterns of features are also made available. Special tokens can also enhance classification. The quality of the learned classifiers for email criticality can be enhanced by inputting to the feature selection procedures handcrafted features that are identified as being useful for distinguishing among email of different time criticality. Thus, during feature selection, single words as well as special phrases and symbols that are useful for discriminating among messages of different levels of time criticality are considered.

Tokens and patterns of value in identifying the criticality of messages include such distinctions as (including Boolean combinations thereof):

**Information in the Header**

**To: field (Recipient information)**
Addressed just to user
Addressed to only a few people including user
Addressed to an alias with a small number of people
Addressed to several aliases with a small number of people
Cc:'d to user
Bcc:'d to user

**From: field (Sender information)**
Names on pre-determined list of important people, potentially segmented into a variety of classes of individuals, e.g., Family members, Friends
Senders identified as internal to the user's company organization
Information about the structure of organizational relationships relative to the user drawn from an online organization chart

Managers user reports to
Managers of the managers of users
People who report to the user

External business people

**Past tense**
These include descriptions about events that have already occurred such as:

**We met**
meeting went
happened
got together
took care of
meeting yesterday

**Future tense**
Tomorrow
This week
Are you going to
When can we
Looking forward to
Will this
Will be

**Meeting and coordination**
Get together
Can you meet
Will get together
Coordinate with
Need to get together
See you
Arrange a meeting
Like to invite
Be around

**Resolved dates**
Future vs. past dates and times indicated from patterns of text used to state dates and times explicitly or typical abbreviations
On 5/2

**Questions**
Words, phrases adjacent to questions marks ?

**Indications of personal requests:**
Can you
Are you
Will you
you please
Can you do
Favor to ask
From you

**Indications of need:**
I need
He needs
She needs
I'd like
It would be great
I want
He wants
She wants
Take care of

**Time criticality**
happening soon
right away
deadline will be
deadline is
as soon as possible
needs this soon
to be done soon
done right away
this soon
by [date]
by [time]

**Importance**
is important
is critical
Word, phrase + !
Explicit priority flag status (low, none, high)

**Length of message**
Number of bytes in component of new message

**Signs of Commercial and Adult-Content Junk email**
Free!!
Word + !!!
Under 18
Adult's only
Percent of capitalized words
Percent nonalphanumeric characters
etc.

Furthermore, still referring to FIG. 2, implicit training of the text classifier 200, as represented by the arrow 204, can be conducted by continually watching the user work in 210. The assumption is that as users work, and lists of mail are reviewed, time-critical messages are read first, and low-priority messages are reviewed later, or just deleted. That is, when presented with a new email, the user is watched to determine whether or she immediately opens the email, and in what order (if more than one new email are present), deletes the email without opening, and/or replies to the email right away. Thus, the text classifier is such that a user is continually watched while working, and the classifier is periodically refined by training in the background and updated for enhancing the real-time decision making. Background methods for building classifiers can extend from those that update the classifier with every new training message.

Other embodiments gather larger quantities of messages and create new filters in a batch process, either per a daily schedule, per the number of new quantities of messages admitted to the training set, or combinations. For each message inputted into the classifier, a new case for the classifier is created. The cases are stored as negative and positive examples of texts that are either high or low priority. Those of ordinary skill within the art understand that the invention is not limited to the use of two classes. What can be recognized are low, medium, and high urgency classes and such that the probabilities of membership in each of these classes are used to build an expected criticality. Larger numbers of criticality classes can be used to seek higher resolution. In addition, a simple estimation of a number can be done directly by watching a user interact with email-rather than labeling the case as one of a specific small set of folders. A classifier can be continued to be updated but have a moving window, where only cases of messages or documents that are newer than some age are considered, specified by the user.

In one embodiment, the constant rate of loss associated with the delayed review of messages is referred to as the expected criticality (EC) of a message,

$$EC = \sum_i C^d(H_i) p(H_i \mid E^d)$$

where C is a cost function, E is an event, H is the criticality class of the email, and the EC is the sum over the likelihood of the classes weighted by the rate of lost described by the cost function C for each of the potential classes.

Referring next to FIG. 3, a text, such as an email message, 300 is input into the text classifier 200, which based thereon generates a priority 302 for the text 300. That is, in one embodiment, the text classifier 200 generates a priority 302, measured as a percentage from 0 to 1 (i.e., 0% to 100%). This percentage is a measure of the likelihood that the text 300 is of high priority, based on the previous training of the classifier 200.

It is noted that as has been described, the text classifier and the priority generated thereby is based on a scheme where each email in the training phase is construed as either high priority or low priority, such that the priority generated by the text classifier is a measure of the likelihood of the text being analyzed is of high priority. This scheme is specifically shown by reference to FIG. 4(a), where the text classifier 200 is trained by a group of texts 400 that are high priority and a group of texts 402 that are low priority, such that a text to be analyzed 400 is input into the classifier 200, which outputs a scalar number 406 measuring the likelihood that the text being analyzed is of high priority. However, those of ordinary skill within the art can appreciate that the invention is not so limited.

For example, referring to FIG. 4(b), a diagram showing a scheme where texts are divided into low, medium, and high priority, according to an embodiment of the invention, is shown. The text classifier 200 in the embodiment of FIG. 4(b) is trained by a group of texts 400 that are high priority and a group of texts 402 that are low priority, as in the previous embodiment, but also by a group of texts 450 that are medium priority. Thus, a text to be analyzed 400 is input into the classifier 200, which outputs a scalar number 406, that can measure the likelihood that the text being analyzed is of high priority, if so desired, or medium priority or low priority. The classifier 200 is also able to output a class 452, which indicates the class of low, medium, or high priority that the text 404 most likely falls into. Those of ordinary skill within the art can appreciate that further classes can also be added if desired.

The invention is not limited to the definition of priority as this term is used by the text classifier to assign such priority to a text such as an email message. In one embodiment, however, priority is defined in terms of a loss function. More specifically, priority is defined in terms of the expected cost in lost opportunities per time delayed in reviewing the text after it has be received - that is, the expected lost or cost that will result for delayed processing of the text. This loss function can further vary according to the type of text received.

For example, the general case is shown in FIG. 5(a), which is a graph of linear cost functions dependent on the priority of a text. In the graph 500, as time increases, the cost of not having reviewed a text also increases. However, the cost increases more for a high priority message, as indicated by the line 502, as compared to a medium priority message, as indicated by the line 504, or a low priority message, as indicated by the line 506. That is, the high priority line 502 may have a slope of 100, the medium priority line 504 may have a slope of 10, and the low priority line 502 may have a slope of one. These slope values can then be used by the text classifier to assist in assigning a priority to a given text, for example, by regression analysis.

Some messages, however, do not have their priorities well approximated by the use of a linear cost function. For example, a message relating to a meeting will have its cost function increase as the time of the meeting nears, and thereafter, the cost function rapidly decreases - since after the meeting is missed, there is not much generally a user can do about it. This situation is better approximated by a non-linear cost function, as shown in FIG. 5(b). In the graph 550, the cost function 554 rapidly increases until it reaches the time of the meeting demarcated by the line 552, after which it rapidly decreases. Thus, those of ordinary skill within the art can appreciate that depending on a message's type, the cost function can be approximated by one of many different representative cost functions, both linear and non-linear.

Thus, as has been described, the priority of a text can be just the likelihood that it is of high priority based on output of a text classifier, or the most likely priority class (i.e., medium, low or high priority) it falls into, also based on the output of the text classifier. However, in another embodiment of the invention, an expected time criticality of each text, such as an email message, is determined. This can be written as

$$EL = \sum_{i}^{n} p(critical_i)C(critical_i)$$

where EL is the expected loss, $p(critical_i)$ is the probability that a text has the criticality $i$ (e.g., where i=0 may be low priority and i=1 may be high priority, or where i=0 may be low priority, i=1 medium priority and i=2 high priority, etc.), $C(critical_i)$ is the cost function for text having the criticality $i$, and $n$ is the total number of criticality classes minus one. The cost functions may be linear or non-linear, as has been described - in the case where the function are linear, the cost function defines a constant rate of loss with time. For non-linear functions, the rate of loss changes with delayed review or processing of the text and can increase or decrease, depending on the amount of delay.

In the case where n=1, specifying that there are only two priority classes low and high, the expected loss can be reformulated as

$$EC = p(critical_{high})C(critical_{high}) + [1 - p(critical_{low})]C(critical_{low})$$

where EC is the expected criticality of a text. Furthermore, if the cost function of low criticality messages is set to zero, this becomes

$$EC = p(critical_{high})C(critical_{high})$$

The total loss until the time of review of a text can be expressed as the integration of the expressed criticality, or,

$$EL = \int_0^t p(critical_{high})C(critical_{high}, t)dt$$

where t is the time delay before reviewing the document.

It is noted that in other embodiments of the invention, other measures that accord a valuable metric for ranking documents, such as email messages, by importance. While the discussion above focused on priority as time criticality, other notions of "importance" can also be trained - for example, by labeling a set of training folders: "High Importance" all the way down to "Low Importance" a measure of "expected importance" can be computed. Another metric can be based on the use of the semantic label, "messages that I would wish to hear about within 1 day while traveling" and to compute a measure for prioritizing messages for forwarding to traveling user.

Furthermore, in one embodiment, a utilized metric is urgency or time-criticality (based on the assignment of an "expected rate of accruing cost with delayed review of documents) as it has clear semantics for decision making, triage, and routing. In this case, the classes are labeled according to different levels of urgency and compute an expected urgency for each message from the probabilities inferred that the message is in each class.

Determining When to Alert the User

In this section of the detailed description, described is provided as to determining when to alert the user of a high-priority text, for example, a text that has a likelihood of being high priority greater than a user-set threshold, or greater than a threshold determined by decision-theoretic reasoning. Thai is, beyond knowing about time-critical messages, it is also important in one embodiment to decide when to alert a user to time-critical messages if the user is not directly viewing incoming email (in one embodiment). In the general case, a cost of distracting the user from the current task being addressed to learn about the time-critical message is determined.

In different embodiments of the invention, different policies for alerting and notification can be used. Two policies include:

- Put a user-specified upper bound on the total loss -- this policy would specify that the system should generate an alert when the total loss associated with the delayed review of a message exceeds some pre-specified "tolerable" loss x.

- Another policy is a cost-benefit analysis based on more complete decision-theoretic analysis, such as NEVA = EVTA - ECA - TC, where NEVA is the net expected value of alerting, EVTA is the expected value of alerting, ECA is the expected cost of alerting, and TC is the transmission cost.

In general, a user should be alerted when a cost-benefit analysis suggests that the expected loss the user would incur in not reviewing the message at time t is greater than the expected cost of alerting the user. That is, alerting should be conducted if

$$EL - EC > 0$$

where EL is the expected loss of non-review of the text at a current time t, and EC is the expected cost of alerting the user of the text at the current time t. The expected loss is as described in the previous section of the detailed description.

However, this formulation is not entirely accurate, because the user will often review the message on his or her own at some point in the future anyway. Therefore, in actuality, the user should be alerted when the expected value of alerting, referred to as EVTA, is positive. The expected value of alerting should thus consider the value of alerting the user of the text now, as opposed to the value of the user reviewing the message later on his or her own, without alert, minus the cost of alerting. This can be stated as

$$EVA = EL_{alert} - EL_{no-alert} - EC$$

where $EL_{alert}$ is the expected loss of the user reviewing the message if he or she were to review the message now, upon being alerted, as opposed to $EL_{no-alert}$, which is the expected loss of the user reviewing the message on his or her own at some point, without being alerted, minus EC, the expected cost of alerting (now) based on a consideration of distraction and on the direct cost of the transmitting the information (for a mobile system).

Furthermore, in one specific embodiment of the invention, information from several messages is grouped together into a single compound alert. Reviewing information about multiple messages in an alert can be more costly than an alert relaying information about a single message. Such increases in distraction can be represented by making the cost of an alert a function of its informational complexity. It is assumed that the EVA of an email message is independent of the EVA of the other email messages. EVA($M_i, t$) is used to refer to the value of alerting a user about a single message $M_i$ at time $t$ and ECA($n$) is used to refer to the expected cost of relaying the content of $n$ messages. Thus, multiple messages can be considered by summing together the expected value of relaying information about a set of $n$ messages,

$$NEVA = \sum_{i=1} EVA(M_i, t) - ECA(n).$$

It is also noted that in order to determine the expect cost of alerting, it is useful to infer or directly access information about whether the user is present - and therefore can see or hear alerts from the computer - or is not present. Sensors can be used in one embodiment that indicate when a user is in the office, such as infrared sensors, pressure sensors (on the chair), etc. However, if such devices are not available, a probability that a user is in the office can be assigned as a function of user activity on the computer, such as the time since last observed mouse or keyboard activity. Furthermore, scheduling information available in a calendar can also be made use of to make inferences about the distance and disposition of a user, to consider the costs of forwarding messages to the user by different means (e.g., cell phone, pager, etc.).

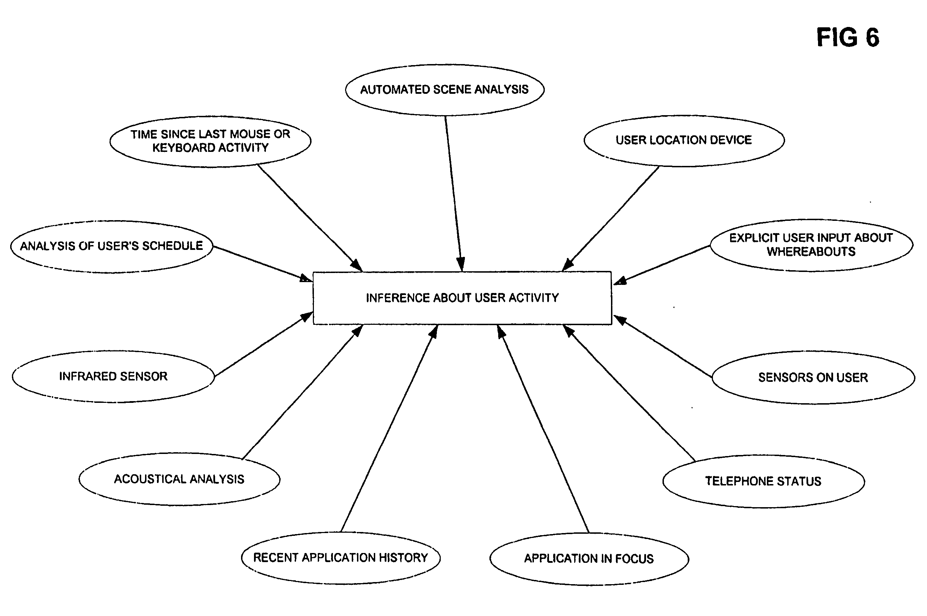

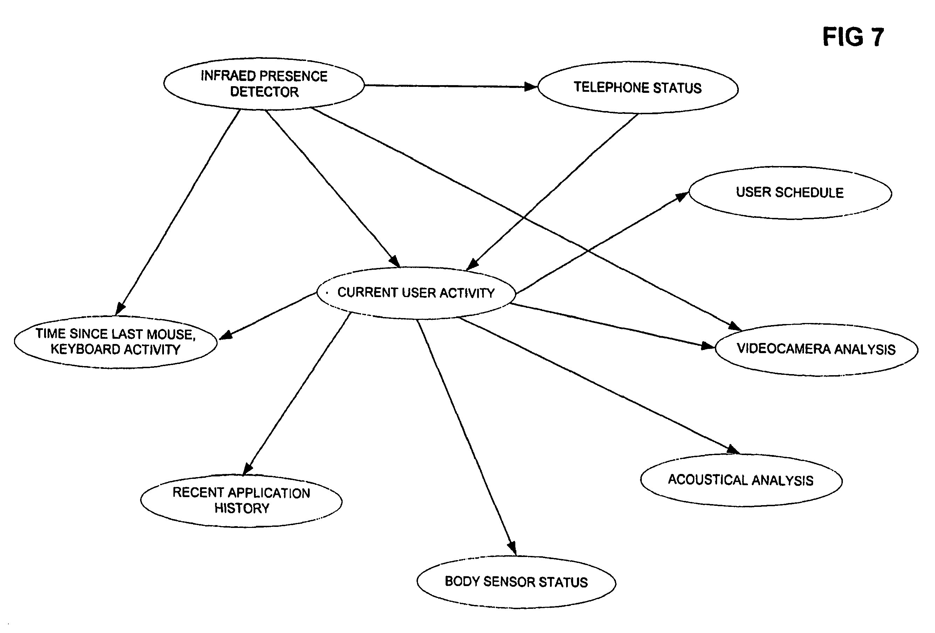

It is also important to know how busy the user is in making decisions about interrupting the user with information about messages with high time criticality. In one embodiment, it is reasoned about whether and the rate at which a user is working on a computer, or whether the user is on the telephone, speaking with someone, or at a meeting at another location. In one embodiment, several classes of evidence can be used to assess a user's activity or his or her focus of attention, as shown in FIG. 6. A Bayesian network, as known in the art, can then be used for performing an inference about a user's activity; an example of such a network is shown in FIG. 7.

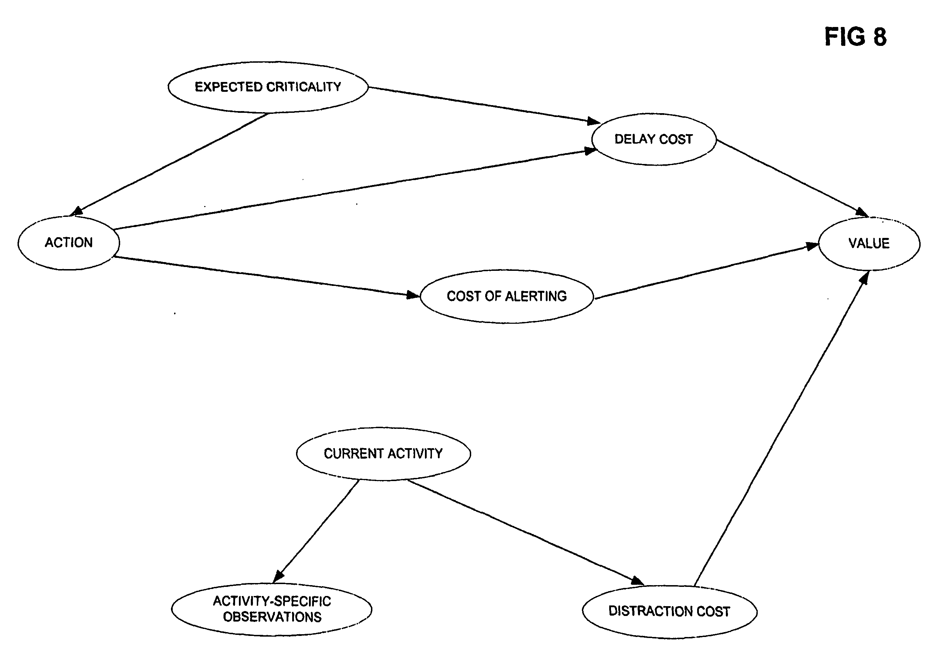

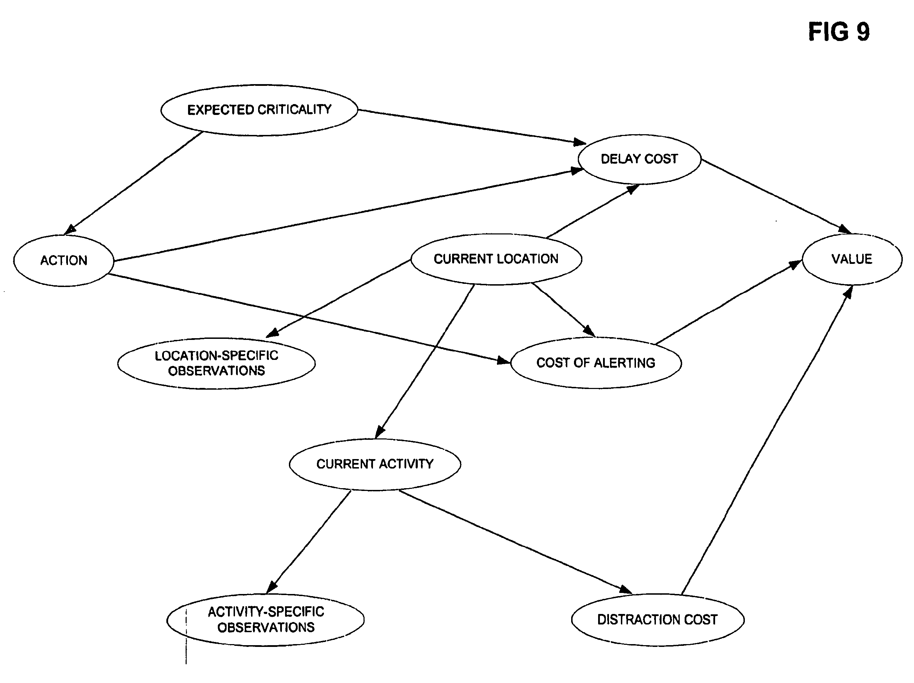

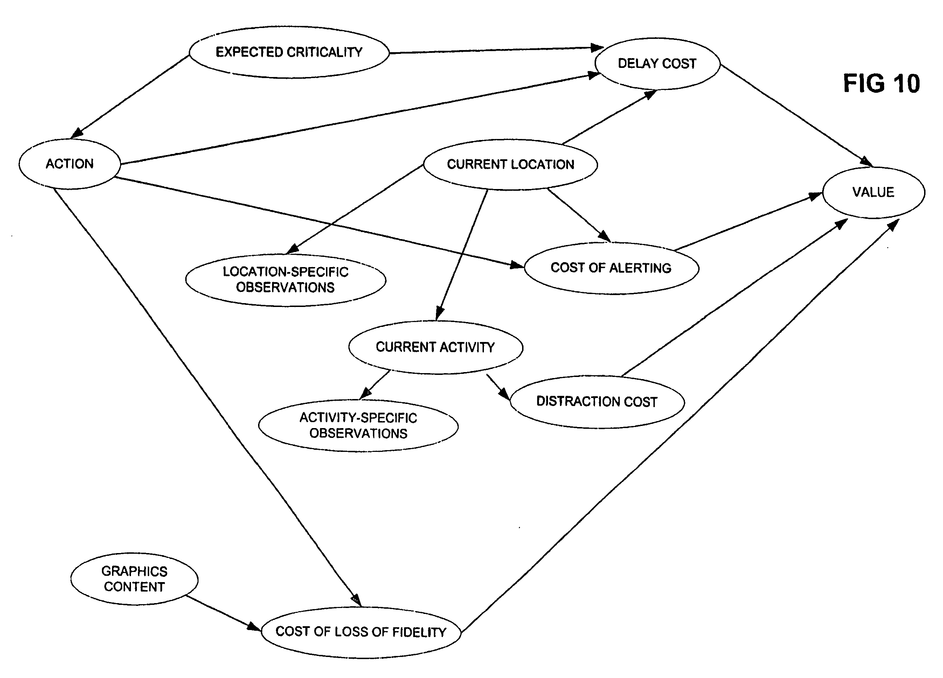

In general, a decision should be made as to when and how to alert users to messages and to provide services (for example) based on the inference of expected criticality and user activity. In one embodiment, this decision is made by utilizing decision models, as known within the art. FIGs. 8-10 are influence diagrams, as known within the art, showing how in one specific embodiment such decision models can be utilized to make this decision. Specifically, FIG. 8 displays a decision model for decisions about interrupting a user, considering current activity, expected time criticality of messages, and cost of alerting depending on the modality. FIG. 9 also includes variables representing the current location and the influence of that variable on activity and cost of the alternate messaging techniques. Finally, FIG. 10 is further expanded to consider the costs associated with losses in fidelity when a message with significant graphics content is forwarded to a user without the graphical content being present.

In still another embodiment, the decision as to when and how to alerts users is made by employment of a set of user-specified thresholds and parameters defining policies on alerting. In this embodiment, user presence can be inferred based on mouse or keyboard activity. Thus, a user can be allowed to input distinct thresholds on alerting for inferred states of activity and nonactivity. Users can input an amount of idle activity following activity where alerting will occur at lower criticalities. In this embodiment, if it is determined that the user is not available based on the time that no computer activity is seen - or on the user's inactivity when an attempt to alert is made - then messages and stored, and are reported to the user in order of criticality when the user returns to interact with the computer (or, returns to the room, given the availability of inputs from infrared or other presence detection).

Furthermore, in this embodiment, users can specify routing and paging options (as well as other output options) as a function of quantities including expected criticality, maximum expected loss, and value of alerting the user.

Method and System

In this section of the detailed description, a computer-implemented method according to an embodiment of the invention is described, and a computerized system according to an embodiment of the invention is described. With respect to the method, the method is desirably realized at least in part as one or more programs running on a computer -- that is, as a program executed from a computer-readable medium such as a memory by a processor of a computer. The program is desirably storable on a machine-readable medium such as a floppy disk or a CD-ROM, for distribution and installation and execution on another computer.

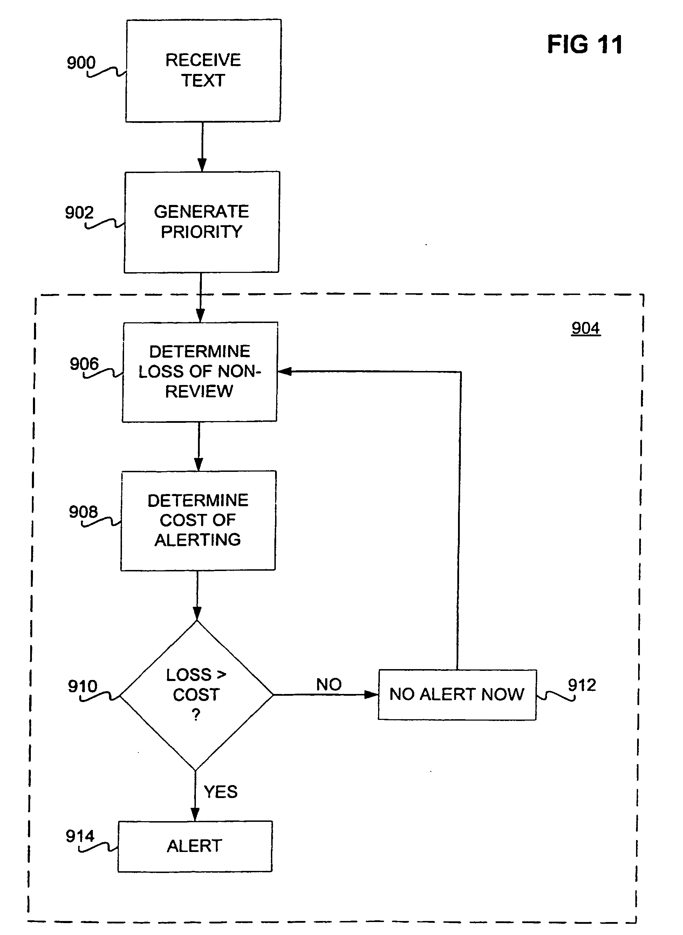

Referring to FIG. 11, a flowchart of a method according to an embodiment of the invention is shown. In 900, a text to have a priority thereof assigned is received. The text can be an email message, or any other type of text; the invention is not so limited. In 902, the priority of the text is generated, based on a text classifier, as has been described. Thus, in one embodiment, 902 includes initially training and continually training the text classifier, as has been described.

The priority of the text is then output in 904. In one embodiment, as indicated in FIG. 11, this can include 906, 908, 910, 912, and 914; however, the invention is not so limited. In 906, an expected loss of non-review of the text at a current time $t$ is determined - in one embodiment, by also considering the expected loss of now-review of the text at a future time, based on the assumption that ultimately the user will review the text him or herself, without being alerted, as has been described. In 908, an expected cost of alerting is determined, as has also been described. If the loss is greater than the cost in 910, then no alert is made at the time $t$, and the method proceeds back to 906, to redetermine the cost-benefit analysis, at a new current time $t$. This is done because as time progresses, the expected loss may at some point outweigh the alert cost, such that the calculus in 910 changes. Upon the expected loss outweighing the alert cost, then an alert to the user is performed in 914, as has been described.

In one embodiment, the output of the alert is performed as is now described. A user is alerted on an electronic device based on an alert criteria, which indicates when the user should be alerted of a prioritized text. Alert criteria that can be used in conjunction with embodiments of the invention are not limited by the invention; however, in one embodiment, the alert criteria are as described in a further section of the detailed description. The electronic device on which the user is alerted can in one embodiment be a pager or a cellular telephone; however, the invention is not so limited.

In one embodiment, the method alerts a user on an electronic device, such as a pager or a cellular phone, based on alert criteria that can be made sensitive to information about the location, inferred task, and focus of attention of the user. Such information can be inferred under uncertainty or can be accessed directly from online information sources. One embodiment makes use of information from an online calendar to control the criteria used to make decisions about relaying information to a mobile device.

In one embodiment, the output of the alert is performed as is now described. The alert is performed by routing the prioritized text based on routing criteria. Routing criteria that can be used in conjunction with embodiments of the invention is not limited by the invention; however, in one embodiment, the routing criteria are as described in a further section of the detailed description. Routing of the text can include forwarding the text, or replying to the sender of the text, in the case where the text is email.

In one embodiment, the output of the alert is performed as is now described. The user is alerted based on predetermined criteria. The predetermined criteria that can be used in conjunction with embodiments of the invention are not limited by the invention; however, in one embodiment, the predetermined criteria are as described in a further section of the detailed description.

In one embodiment, a sound is played to alert the user to a prioritized document. In other embodiments, an agent or automated assistant is opened - that is, the agent appears on the screen, to notify the user of the prioritized document. In another embodiment, the prioritized document is opened - that is, the document is displayed on the screen. The document can receive focus - that is, the window in which the document is displayed is selected as the active window, as opposed to the window the user was previously working in. This can also include sizing the document based on its priority, such that the higher the priority of the document, the larger the window in which it is displayed, and/or centrally locating the document based on its priority - for example, moving the document closer to the screen as a function of the priority of the document.

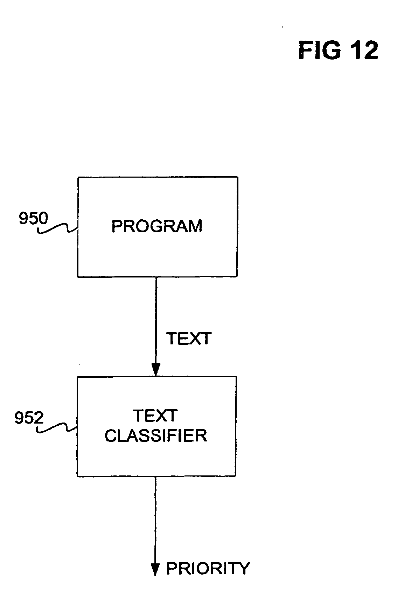

Referring next to FIG. 12, a diagram of a system according to an embodiment of the invention is shown. The system includes a program 950 and a text classifier 952. Each of the program 950 and the classifier 952 include a computer program executed by a processor of a computer from a computer-readable medium thereof, in one embodiment. However, the invention is not so limited.

The program 950 generates a text for input into the text classifier 952. In one embodiment, the program includes an electronic mail program that receives email, which then serve as the text. The text classifier 952, based on the text, generates a priority thereof, as has been described. In one embodiment, the text classifier 952 is a Bayesian text classifier, while in another embodiment, it is a Support Vector Machine classifier. The priority of the text output by the text classifier 952 can then be used in further conjunction with a cost-benefit analysis, as has been described, to effectuate further output and/or alerting based thereon, as has been described. The invention is not so limited, however.

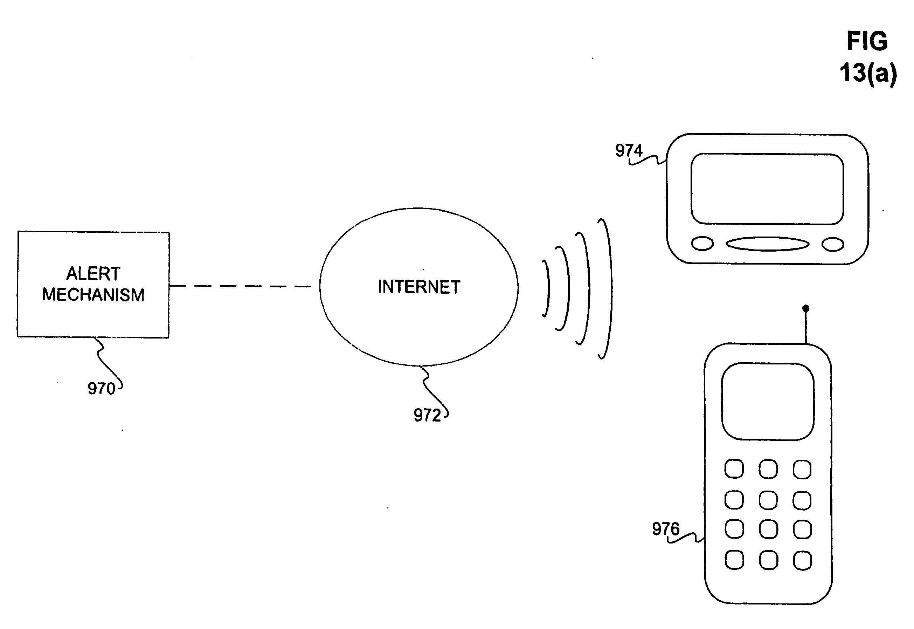

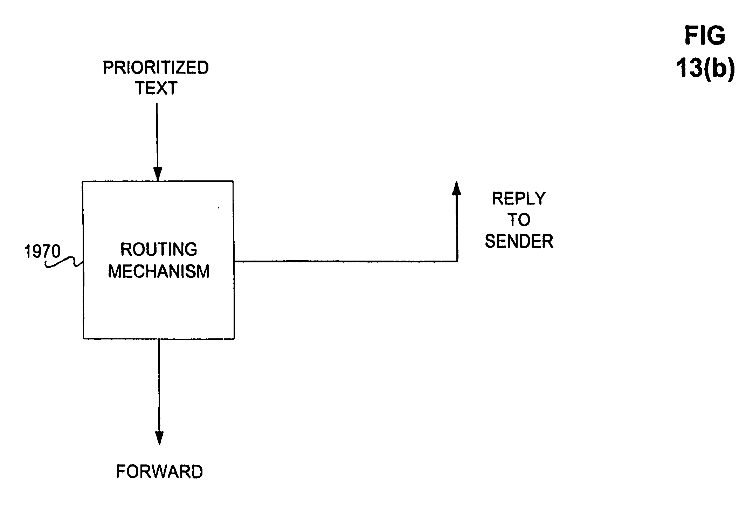

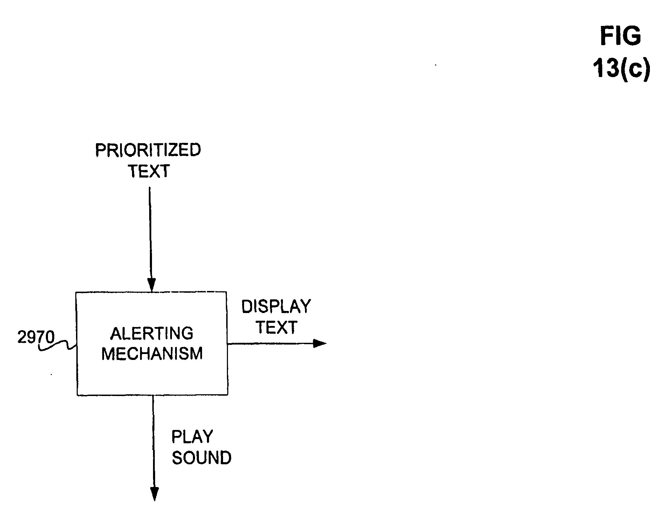

Referring next to FIG. 13(a), a diagram of a system according to another embodiment of the invention is shown. The system of FIG. 13(a) includes an additional component, an alert mechanism 970. Not shown in FIG. 13(a) are the program 950 and the text classifier 952; however, the alert mechanism 970 is operatively and/or communicatively coupled to the latter. In one embodiment, the mechanism 970 includes a computer program executed by a processor of a computer from a computer-readable medium thereof, but the invention is not so limited.

As shown in FIG. 13(a), the alert mechanism 970 is communicatively coupled to the Internet 972, which is the network by which the alert mechanism 970 contacts an electronic device to alert the user to a prioritized text, based on an alert criteria, in one embodiment. The network is not limited to the Internet 972, however. Thus, the alert mechanism 970 is able to alert the user of a prioritized text via contacting a pager 974, or a cellular phone 976, or other electronic devices capable of receiving information from over a network such as the Internet 972, and which are not shown in FIG. 13(a). The invention is not limited as to particular alert criteria.

Referring next to FIG. 13(b), a diagram of a system according to another embodiment of the invention is shown. The system of FIG. 13(b) includes an additional component, a routing mechanism 1970. Not shown in FIG. 13 are the program 950 and the text classifier 952; however, the routing mechanism 1970 is operatively and/or communicatively coupled to the latter. In one embodiment, the mechanism 1970 includes a computer program executed by a processor of a computer from a computer-readable medium thereof, but the invention is not so limited.

The routing mechanism 1970, as shown in FIG. 13(b), receives a prioritized text, and based on a routing criteria, is able to reply to the sender of the text (in the case where the text is an email message), in which case the mechanism is a replying mechanism. Also based on the routing criteria, the mechanism 1970 is able to forward the text, for example, to a different email address, in which case the mechanism is a forwarding mechanism. The former may be useful when the user wishes to indicate to the sender of a message that the user is not present, and thus may provide the sender with contact information as to how to reach the user. The latter may be useful when the user has email access to a different email address, such as a web-based email address as known in the art (examples include Microsoft Corp.'s HotMail at http://www.hotmail.com), such that the user wishes to be kept informed of high priority emails at this alternative address.

Referring next to FIG. 13(c), a diagram of a system according to another embodiment of the invention is shown. The system of FIG. 13(c) includes an additional component, an alerting mechanism 2970. Not shown in FIG. 13(c) are the program 950 and the document classifier 952; however, the alerting mechanism 2970 is operatively and/or communicatively coupled to the latter. In one embodiment, the mechanism 2970 includes a computer program executed by a processor of a computer from a computer-readable medium thereof, but the invention is not so limited. The alerting mechanism 2970, as shown in FIG. 13(c), receives a prioritized document, and based on a predetermined criteria, is able to display the document, or play a sound, as has been described. In one embodiment, all of the documents (e.g., messages) that have been received, and that have a priority greater than a predetermined threshold, are displayed as a list.

The system, as well as other embodiments of the invention, can include other functionality as well. For example, a special priorities-oriented viewer can be provided that acts like a special view onto one's email store, in terms of its ability to filter by priority. The special viewer can allow for summaries of messages - e.g., the sender, title, and optionally a brief snippet of the message - to be sorted in a list by priority score. The viewer can also allow a user to sort and view only those messages that remain unread as an option. The special viewer can also allow users to scope the sorting of messages by priority within some scoped time period, and to change the scope or periods of time being considered. For example, a user can specify that the viewer only display email from today; or, the user can specify that the list span two days, one week, all the messages in the in-box, etc. The viewer can also let the user prune from the display messages below a user-specified minimal threshold.

Furthermore, beyond the use of qualitatively different sounds for low, medium, and high priorities, one or more scalar parameters can be used that defined the manner by which an alerting sound is rendered. The parameters can be made functions of the inferred priority. Such parameters include variables that dictate something as simple as the volume of the alerting sound, for example, to continuous changes in the modulation, resonance, etc., of the sound.

Other functionality includes a simple form can be provided to users to define thresholds among different ranges of uncertainty, and they can specify multiple options involving the automation of the sizing and centering of messages within each range. A "While Away" briefer can be included to give the user a summary of messages that have arrived while a user was away or busy with another application. The system can be instructed to bring up a summary of email directed by priority values when a user returns after being away, or comes back to the special viewer after working with the system in a quiet mode. The automated text summarizer can be controlled to decrease continuously the summarization level of the text of messages as a function of the priority of the document - that is, as documents increase in priority, they are less and less summarized in the summarized view. The priorities can also be used to color or add special annotations, such as priority flags, icons indicating level of priority, a special priority field itself, etc., to email headers appearing in the display.

Furthermore, a user-defined threshold can be used on the priority assigned to messages to set up a temporary interaction context that is active for some portion of time following an alert or summary that a message has arrived exceeding the threshold. Following an alert, and lasting for the time period that an interaction context is active, predetermined gestures are allowed to give the user access to more details about the message that was associated with the alert. Such gestures include a simple wiggle of the mouse from side to side, for example. As an example, an audio alert may indicate that an incoming message has exceeded some threshold of criticality. The user can then wiggle the mouse quickly from side to side to see details about the message that led to the alert. The amount of time that such an interaction context is active can be made a function of the priority of the message, or can be user-defined.

Alert Criteria

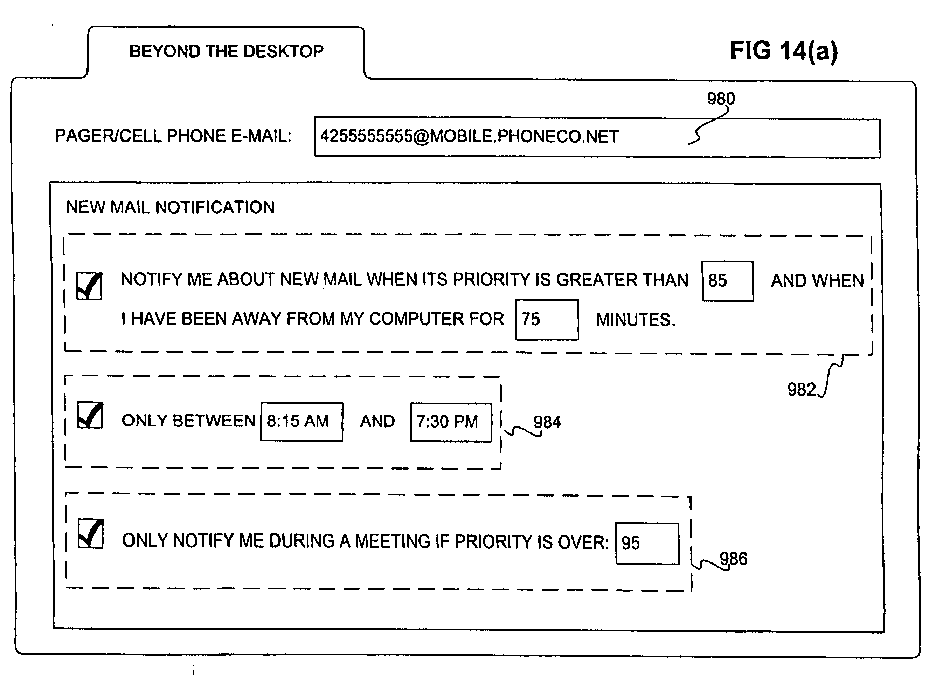

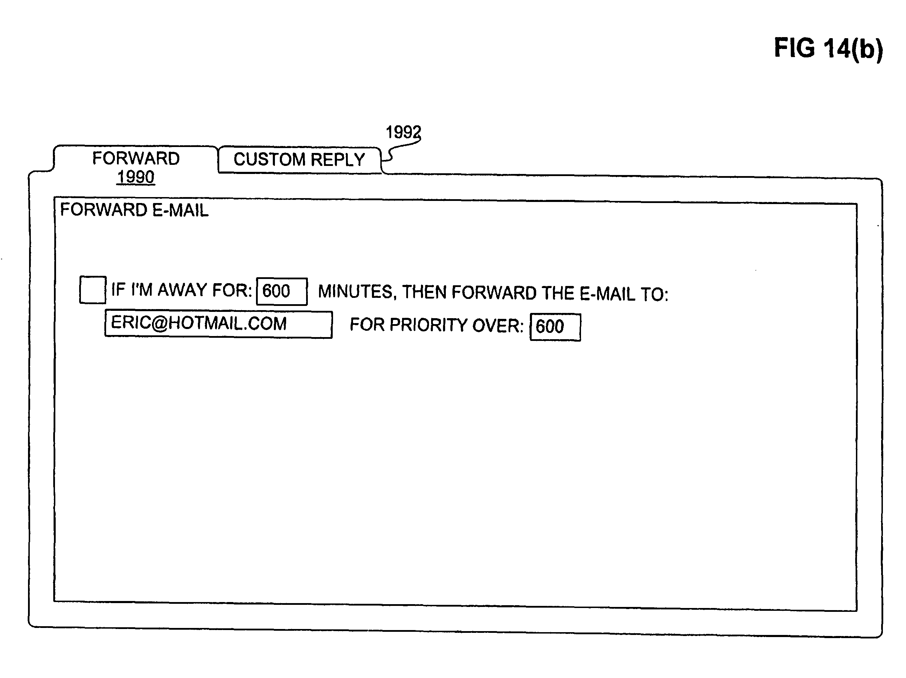

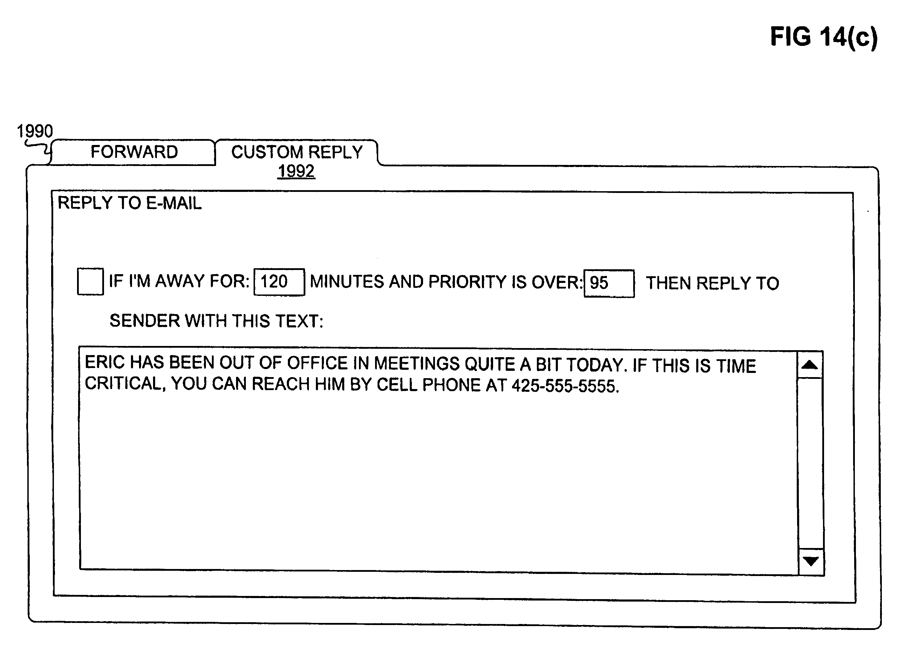

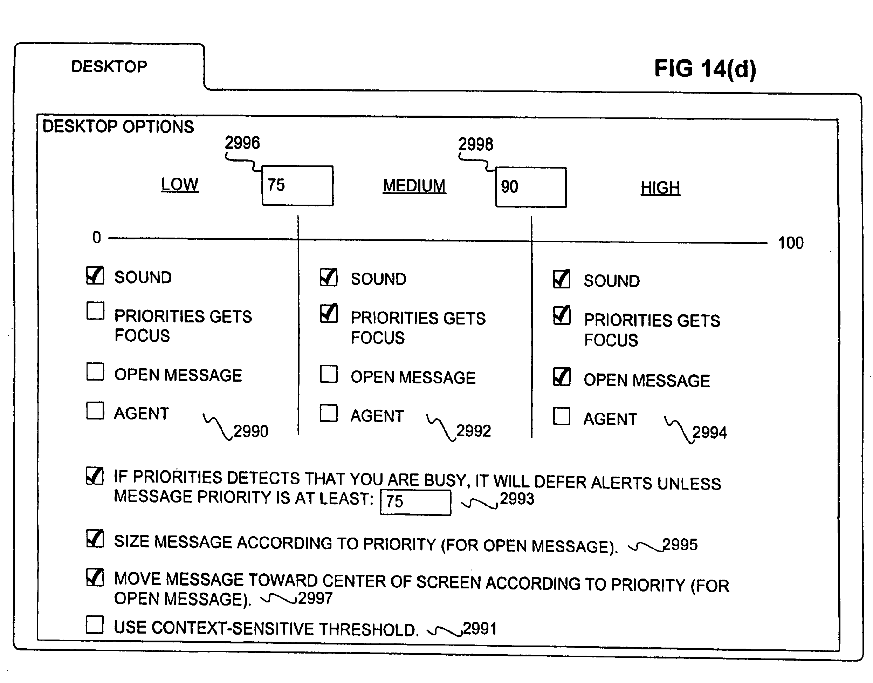

In this section of the detailed description, alert criteria according to one embodiment of the invention are described. The alert criteria are the criteria that govern when and how a user is alerted to a prioritized text. The alert criteria is described with reference to FIG. 14(a), which is a diagram of a user interface via which alert criteria options can be modified, according to one embodiment of the invention.

Referring now to FIG. 14(a), in text entry box 980, the user is able to enter the email address of a pager or a cellular phone on which the user would like to be notified of prioritized text. As known within the art, pagers and cellular phones are available that allow for paging by emailing text to an email address assigned to the pager or cellular phone. For example, as shown in FIG. 14(a), the device has an email address 4255555555@mobile.phoneco.net, where 4255555555 corresponds to the phone number of the cellular phone or the pager number of the pager, as provided by the phone company "phoneco."

It is noted that the alert criteria of FIG. 14(a) specifically relates to new email messages, but that the invention is not so limited. Three alert criteria are specifically shown in FIG. 14(a), and are referred to as options 982, 984 and 986. The options are not mutually exclusive, however. That is, the user can select one, two, or all three of the options 982, 984 and 986.

In the option 982, the user is able to specify that the electronic device should be contacted if a new email is received that has a priority greater than a predetermined threshold, and the user has been away from the computer for more than a predetermined amount of time. As shown in FIG. 14(a), the predetermined threshold is a priority of 85, while the predetermined amount of time is 75 minutes. Thus, if it is determined that the priority of an email message is greater than 85, and that the user has been away from the computer for more than 75 minutes, then the user's electronic device will be alerted, consistent with the other options 984 and/or 986 if selected.

In the option 984, the user is able to specify that the electronic device should be contacted only when the current time is within a predetermined range of times. As shown in FIG. 14(a), the predetermined range of times is between 8:15 a.m. and 7:30 p.m. Thus, if it is determined that the current time is between 8:15 a.m. and 7:30 p.m., then the user's electronic device will be alerted, consistent with the other options 982 and/or 986 if selected.

In the option 986, the user is able to specific that if the user is in a meeting - for example, as determined by examining a schedule of the user - then the user should only be notified if the priority is greater than a predetermined meeting threshold. In general, this meeting threshold is desirably greater than the threshold specified in the option 982 - the purpose of this greater threshold is to indicate that the user is receptive to notification of email messages greater than a particular priority in usual circumstances, but that the user is receptive to notification of email messages during meetings only if they have a priority that is unusually great. As shown in FIG. 14(a), then, the predetermined meeting threshold is a priority of 95, which is higher than the predetermined threshold of 85 in the option 982. Thus, if it is determined that the user is in a meeting, and a message is received having a threshold greater than 95, then the user is alerted via his or her electronic device.

Routing Criteria

In this section of the detailed description, routing criteria according to one embodiment of the invention is described. The routing criteria is the criteria that governs when and how a user is alerted to a prioritized text by having the text routed - for example, forwarded to another email address, or such that the sender of the original text is replied to. The routing criteria is described with reference to FIGs. 14(b) and 14(c), which are diagrams of a user interface via which routing criteria options can be modified, according to one embodiment of the invention.

Referring first to FIG. 14(b), two tabs are selectable, a forward tab 1990, and a custom reply tab 1992. In FIG. 14(b), however, the forward tab 1990 is specifically selected, such that routing criteria with respect to forwarding a prioritized text such as an email message are shown. The user is able to specify an alternative email address to which high-priority emails are forwarded. More specifically, emails are forwarded to the address if the user has been away from the computer more than a predetermined amount of time, and a particular email to be forwarded has a priority greater than a predetermined threshold. For example, as shown in FIG. 14(b), the predetermined threshold is a priority of 95, and the predetermined amount of time is 600 minutes. Thus, if it is determined that the priority of an email message is greater than 95, and that the user has been away from the computer for more than 600 minutes, then the email will be forwarded to the specified email address.

Referring next to FIG. 14(c), the same two selectable tabs are shown, the forward tab 1990 and the custom reply tab 1992. However, in FIG. 14(c), the custom reply tab 1992 is specifically selected, such that routing criteria with respect to replying to the sender of a prioritized text such as an email message are shown. The user is able to specify a predetermined message that will be sent in the reply to the sender of the high-priority email message. Emails are replied to if the user has been away from the computer more than a predetermined amount of time, and a particular email to be replied to has a priority greater than a predetermined threshold. For example, as shown in FIG. 14(c), the predetermined threshold is a priority of 95, and the predetermined amount of time is 120 minutes. Thus, if it is determined that the priority of an email message is greater than 95, and that the user has been away from the computer for more than 120 minutes, then the sender of the email will be replied to with the specified predetermined message.

Further Predetermined Criteria for Alerting

In this section of the detailed description, further predetermined criteria for alerting according to one embodiment of the invention are described. The routing criteria is the criteria that governs when and how a user is alerted to a prioritized document, for example, by having the document displayed, or a sound played to indicate the arrival of the document. The criteria is described with reference to FIG. 14(d), which is a diagram of a user interface via which criteria options can be modified, according to one embodiment of the invention.

Referring to FIG. 14(d), the manner by which the user is alerted to a prioritized document depends on whether the document is classified as low, medium, or high priority. That is, depending on whether the document is classified as low, medium, or high priority, the alerting of the document is governed by the options selected in regions 2990, 2992 and 2994, respectively. In one embodiment, the thresholds between a low and a medium priority document, and between a medium and a high priority document are user defined. Thus, a user indicates the threshold between low and medium in box 2996, and the threshold between medium and high in box 2998. In other words, the user is alerting based on the priority being within a predetermined priority range. Alternatively, if the user selects check box 2991, the thresholds are set in a context-sensitive manner, by decision-theoretic reasoning.

Each region 2990, 2992, and 2994 has four options regarding the alerting of a prioritized document. First, the user may indicate that a sound is played when a document has a priority falling into a given region. Second, the user may indicate that a summary of the message and its priority receives focus, which means that a summary view is displayed listing the inferred priority of the message, and information summarizing the content and nature of the message, including such information as the subject and sender of the message. This summary view may be temporarily selected as the active task on the screen (for example, in a window displaying a list of documents, this window will have focus), as opposed to the task currently being worked on by the user. Third, the user may indicate that the document be automatically opened in a window on the screen. Fourth, the user may indicate that an agent or automated assistant with speech recognition and text-to-speech rendering abilities be activated, to alert the user to the priority and to allow the user to engage further in a dialog about hearing or seeing more about the message.

Other alerting options include those selected by checking boxes 2993, 2995 or 2997. Checking box 2993 indicates that if the user is busy, then alerts are deferred until the user is no longer busy, unless the priority of the document is at least a predetermined threshold. As shown in FIG. 14(d), this threshold is 75. Thus, it is first determined whether the user is busy and whether the priority of the document is greater than 75; if both of these conditions are true, then the user is alerted. Checking box 2995 indicates that the window in which the document is being displayed is sized according to its priority, while checking box 2997 indicates that the window in which the document is being displayed is moved towards the center of the screen according to its priority.

**Claims**

1.  A computer-implemented method operable on a received text, comprising:

    generating (902) a priority of the text based on a text classifier by determining a likelihood that the text is of high priority; performing (904) an iterative determination process comprising:

    a) determining (906) an expected loss of non-review of the text at a current time based on the priority;
    b) determining (908) an expected cost of outputting the text at the current time;
    c) if it is determined that the expected loss is greater than the expected cost, outputting (914) the text for a user; and
    d) if not, redetermining (906, 908) the expected loss of non-review and the expected cost of outputting.

2.  The method of claim 1, wherein determining the expected loss of non-review comprises determining a likelihood that the user will review the text at a future time without the user being alerted in association with the text.

3.  The method of claim 1, wherein determining the expected loss of non-review comprises determining a current expected amount of lost opportunity for the user resulting from non-review of the text as a function of time.

4.  The method of claim 1, wherein the text classifier is one of a Bayesian classifier and a support-vector machine classifier.

5.  The method of claim 1, wherein outputting the text comprises alerting the user to the text based on the priority and a criteria.

6.  The method of claim 5, wherein the criteria comprises the priority falling within a range of priorities.

7.  The method of claim 5, wherein the criteria comprises the priority exceeding a priority threshold.

8.  The method of claim 5, wherein outputting the text comprises alerting the user to the text on an electronic device.

9.  The method of claim 8, wherein the electronic device is one of: a pager, and a cellular phone.

10. The method of claim 1, wherein outputting the text comprises routing the text based on the priority and a criteria.

11. The method of claim 10, wherein the criteria comprises one of: the priority falling within a range of priorities, and the priority exceeding a priority threshold.

12. A computerized system comprising:

    a text classifier (200, 952) to generate a priority of a text received from an application program; and
    a mechanism (970, 1970, 2970) to continually determine , after the text classifier has generated a priority, whether an expected loss of non-review of the text is greater than the expected cost of outputting the text for a user, the expected loss accounting for the priority of the text, redetermine the expected loss of non-review and the expected cost of outputting if the expected loss is not greater than the expected cost, and output the text for the user if the expected loss of non-review is greater than the expected cost of outputting.

**13.** The system of claim 12, wherein the expected loss of non-review accounts for a likelihood that the user will review the text at a future time with an absence of an alert related to the text.

**14.** The system of claim 12, wherein the expected loss of non-review is based on a current expected amount of lost opportunity for the user resulting from non-review of the text as a function of time.

**15.** The system of claim 12, wherein the mechanism is to output the text by alerting the user to the text based on the priority and a criteria.

**16.** The system of claim 15, wherein the mechanism is to output the text by alerting the user to the text on an electronic device.

**17.** The system of claim 12, wherein the mechanism is to output the text by routing the text based on the priority and a criteria.

**18.** The system of claim 12, wherein at least one of the mechanism and the text classifier is a computer program executed by a processor from a computer readable medium.

**Patentansprüche**

**1.** Computerimplementiertes Verfahren, das auf einen empfangenen Text angewendet werden kann, wobei es umfasst:

Erzeugen (902) einer Priorität des Textes auf Basis eines Text-Klassifikators durch Bestimmen einer Wahrscheinlichkeit, dass der Text hohe Priorität hat;
Durchführen (904) eines iterativen Bestimmungsprozesses, der umfasst:

a) Bestimmen (906) eines erwarteten Verlustes beim Ignorieren des Textes zu einem aktuellen Zeitpunkt auf Basis der Priorität;
b) Bestimmen (908) erwarteter Kosten beim Ausgeben des Textes zu dem aktuellen Zeitpunkt;
c) Ausgeben (914) des Textes für einen Benutzer, wenn bestimmt wird, dass der erwartete Verlust höher ist als die erwarteten Kosten; und
d) wenn nicht, erneutes Bestimmen (906, 908) des erwarteten Verlustes beim Ignorieren und der erwarteten Kosten beim Ausgeben.

**2.** Verfahren nach Anspruch 1, wobei Bestimmen des erwarteten Verlustes beim Ignorieren Bestimmen einer Wahrscheinlichkeit umfasst, dass der Benutzer den Text zu einem zukünftigen Zeitpunkt liest, ohne dass dem Benutzer im Zusammenhang mit dem Text ein Hinweis gegeben wird.

**3.** Verfahren nach Anspruch 1, wobei Bestimmen des erwarteten Verlustes beim Ignorieren Bestimmen eines aktuellen erwarteten Maßes verloren gegangener Möglichkeiten für den Benutzer, das aus dem Ignorieren des Textes resultiert, als Funktion der Zeit umfasst.

**4.** Verfahren nach Anspruch 1, wobei der Text-Klassifikator ein Bayesscher Klassifikator oder ein Support-Vector-Machine-Klassifikator ist.

**5.** Verfahren nach Anspruch 1, wobei Ausgeben des Textes Hinweisen des Benutzers auf den Text auf Basis der Priorität und eines Kriteriums umfasst.

**6.** Verfahren nach Anspruch 5, wobei das Kriterium die Priorität umfasst, die in einen Bereich von Prioritäten fällt.

**7.** Verfahren nach Anspruch 5, wobei das Kriterium die Priorität umfasst, die einen Prioritäts-Schwellenwert übersteigt.

**8.** Verfahren nach Anspruch 5, wobei Ausgeben des Textes Hinweisen des Benutzers auf den Text auf einer elektronischen Vorrichtung umfasst.

**9.** Verfahren nach Anspruch 8, wobei die elektronische Vorrichtung entweder eine Funkrufeinrichtung oder ein Mobiltelefon ist.

**10.** Verfahren nach Anspruch 1, wobei Ausgeben des Textes Wegwahl des Textes auf Basis der Priorität und eines Kriteriums umfasst.

**11.** Verfahren nach Anspruch 10, wobei das Kriterium die Priorität, die in einen Bereich von Prioritäten fällt, oder die Priorität umfasst, die einen Prioritäts-Schwellenwert übersteigt.

**12.** Computersystem, das umfasst:

einen Text-Klassifikator (200, 952) zum Erzeugen einer Priorität eines von einem Anwendungsprogramm empfangenen Textes;
einen Mechanismus (970, 1970, 2970), der, nachdem der Text-Klassifikator eine Priorität erzeugt hat, kontinuierlich bestimmt, ob ein erwarteter Verlust beim Ignorieren des Textes höher ist als die erwarteten Kosten beim Ausgeben des Textes für einen Benutzer, wobei der erwartete Verlust die Priorität des Textes berücksichtigt, den erwarteten Verlust beim Ignorieren und die erwarteten Kosten beim Ausgeben neu bestimmt, wenn der erwartete Verlust nicht höher ist als die erwarteten Kosten, und den Text für den Benutzer ausgibt, wenn der erwartete Verlust beim Ignorieren höher ist als die erwarteten Kosten beim Ausgeben.

**13.** System nach Anspruch 12, wobei der erwartete Verlust beim Ignorieren eine Wahrscheinlichkeit berücksichtigt, dass der Benutzer den Text zu einem zukünftigen Zeitpunkt beim Nichtvorhandensein eines auf den Text bezogenen Hinweises liest.

**14.** System nach Anspruch 12, wobei der erwartete Verlust beim Ignorieren auf einem aktuell erwarteten Maß verloren gegangener Möglichkeiten für den Benutzer, das aus dem Ignorieren des Textes resultiert, als einer Funktion der Zeit basiert.

**15.** System nach Anspruch 12, wobei der Mechanismus dazu dient, den Text auszugeben, indem er den Benutzer auf Basis der Priorität und eines Kriteriums auf den Text hinweist.

**16.** System nach Anspruch 15, wobei der Mechanismus dazu dient, den Text auszugeben, indem er den Benutzer auf den Text auf einer elektronischen Vorrichtung hinweist.

**17.** System nach Anspruch 12, wobei der Mechanismus dazu dient, den Text auszugeben, indem er Wegwahl des Textes auf Basis der Priorität und eines Kriteriums durchführt.

**18.** System nach Anspruch 12, wobei wenigstens der Mechanismus oder der Text-Klassifikator ein Computerprogramm ist, das durch einen Prozessor von einem computerlesbaren Medium ausgeführt wird.

**Revendications**

**1.** Procédé mis en oeuvre sur un ordinateur susceptible d'opérer sur un texte reçu, comprenant les étapes consistant à :

générer (902) une priorité du texte basée sur un classificateur de texte en déterminant une probabilité pour que le texte soit de priorité élevée ;
effectuer (904) un processus de détermination par itérations comprenant les étapes consistant à :

a) déterminer (906) une perte prévue de non-révision du texte à un moment présent en se basant sur la priorité ;
b) déterminer (908) un coût prévu de sortie du texte audit moment présent ;
c) s'il est déterminé que la perte prévue est supérieure au coût prévu, sortir (914) le texte pour un utilisateur ; et
d) si tel n'est pas le cas, déterminer à nouveau (906, 908) la perte prévue de non-révision et le coût prévu de sortie.

**2.** Procédé selon la revendication 1, dans lequel la détermination de la perte prévue de non-révision comporte la détermination d'une probabilité pour que l'utilisateur révise le texte à un moment futur sans que l'utilisateur soit averti en association avec le texte.

**3.** Procédé selon la revendication 1, dans lequel la détermination de la perte prévue de non-révision comporte la détermination d'une quantité prévue présente d'opportunité perdue pour l'utilisateur résultant de la non-révision du texte sous la forme d'une fonction du temps.

**4.** Procédé selon la revendication 1, dans lequel le classificateur de texte est l'un d'un classificateur bayésien et d'un classificateur de machine à vecteurs de support.

**5.** Procédé selon la revendication 1, dans lequel la sortie du texte comporte l'avertissement de l'utilisateur au sujet du texte en se basant sur la priorité et un critère.

**6.** Procédé selon la revendication 5, dans lequel le critère comporte la priorité qui appartient à un intervalle de priorités.

**7.** Procédé selon la revendication 5, dans lequel le critère comporte la priorité qui dépasse un seuil de priorité.

**8.** Procédé selon la revendication 5, dans lequel la sortie du texte comporte l'avertissement de l'utilisateur au sujet du texte sur un dispositif électronique.

**9.** Procédé selon la radiation 8, dans lequel le dispositif électronique est l'un d'un téléavertisseur et d'un téléphone cellulaire.

**10.** Procédé selon la revendication 1, dans lequel la sortie du texte comporte le routage du texte en se basant sur la priorité et un critère.

**11.** Procédé selon la revendication 10, dans lequel le critère comporte l'un de la priorité qui appartient à un intervalle de priorités et de la priorité qui dépasse un seuil de priorité.

**12.** Système informatisé comprenant:

un classificateur de texte (200, 952) destiné à générer une priorité d'un texte reçu d'un programme d'application ; et
un mécanisme (970, 1970, 2970) destiné à déterminer en permanence, après que le classificateur de texte ait généré une priorité, si une perte prévue de non-révision du texte est supérieure au coût prévu de sortie du texte pour l'utilisateur, la perte prévue tenant lieu de priorité du texte, déterminer à nouveau la perte prévue de non-révision et le coût prévu de sortie si la perte prévue n'est pas supérieure au coût prévu, et sortir le texte pour l'utilisateur si la perte prévue de non-révision est supérieure au coût prévu de sortie.

**13.** Système selon la revendication 12, dans lequel la perte prévue de non-révision tient lieu d'une probabilité pour que l'utilisateur révise le texte à un moment futur avec une absence d'avertissement relatif au texte.

**14.** Système selon la revendication 12, dans lequel la perte prévue de non-révision est basée sur une quantité prévue présente d'opportunité perdue pour l'utilisateur résultant d'une non-révision du texte, en fonction du temps.

**15.** Système selon la revendication 12, dans lequel le mécanisme consiste à sortir le texte en avertissant l'utilisateur au sujet du texte en se basant sur la priorité et un critère.

**16.** Système selon la revendication 15, dans lequel le mécanisme consiste à sortir le texte en avertissant l'utilisateur au sujet du texte sur un dispositif électronique.

**17.** Système selon la vacation 12, dans lequel le mécanisme consiste à sortir le texte par routage du texte en se basant sur la priorité et un critère.

**18.** Système selon la revendication 12, dans lequel au moins l'un du mécanisme et du classificateur de texte est un programme informatique exécuté par un processeur à partir d'un support lisible par ordinateur.

FIG 1

47 MONITOR

20

48 VIDEO ADAPTER

21 PROCESSING UNIT

SYSTEM BUS 23

22

SYSTEM MEMORY
(ROM) 24
26 BIOS
25
35 OPERATING SYSTEM
36 APPLICATION PROGRAMS
37 OTHER PROGRAM MODULES
38 PROGRAM DATA

32 HARD DISK DRIVE INTERFACE
27

33 MAGNETIC DISK DRIVE INTERFACE
28

34 OPTICAL DRIVE INTERFACE
30
31

46 SERIAL PORT INTERFACE

53 NETWORK INTERFACE

29

42

40

54 MODEM

LOCAL AREA NETWORK
51

WIDE AREA NETWORK
52

49 REMOTE COMPUTER

50

36 APPLICATION PROGRAMS

35 OPERATING SYSTEM
36 APPLICATION PROGRAMS
37 OTHER PROGRAM MODULES
38 PROGRAM DATA

**FIG 2**

CLASSIFIER CONSTRUCTION AND FEATURE SELECTION 206 → EXPLICIT 202 → TEXT CLASSIFIER 200 ← IMPLICIT 204 ← WATCH USER WORK 210

**FIG 3**

300 TEXT
MESSAGE

TEXT
CLASSIFIER

200

302 PRIORITY

**FIG 4(a)**

TEXT TO BE ANALYZED — 404

TRAINING TEXTS: HIGH PRIORITY — 400

TRAINING TEXTS: LOW PRIORITY — 402

CLASSIFIER 200

SCALAR NUMBER — 406

**FIG 4(b)**

EP 1 384 163 B1

404 → TEXT TO BE ANALYZED

400 → TRAINING TEXTS: HIGH PRIORITY

TRAINING TEXTS: MEDIUM PRIORITY

450

402 → TRAINING TEXTS: LOW PRIORITY

CLASSIFIER

200

406 → SCALAR NUMBER

452 → CLASS

**FIG 5(a)**

LINEAR:

HIGH

502

MEDIUM

504

506

LOW

COST

TIME

500

**FIG 5(b)**

552

554

NON-
LINEAR:

COST

TIME

FIG 6

# FIG 7

EP 1 384 163 B1

**FIG 8**

FIG 9

EP 1 384 163 B1

FIG 10

EP 1 384 163 B1

**FIG 11**

900 — RECEIVE TEXT

902 — GENERATE PRIORITY

904

906 — DETERMINE LOSS OF NON-REVIEW

908 — DETERMINE COST OF ALERTING

910 — LOSS > COST ?

NO — NO ALERT NOW — 912

YES

914 — ALERT

30

**FIG 12**

950 ⟶ PROGRAM

TEXT

952 ⟶ TEXT
CLASSIFIER

PRIORITY

FIG 13(a)

FIG
13(b)

PRIORITIZED
TEXT

1970

ROUTING
MECHANISM

REPLY
TO
SENDER

FORWARD

EP 1 384 163 B1

FIG 13(c)

PRIORITIZED TEXT → ALERTING MECHANISM (2970) → DISPLAY TEXT, PLAY SOUND

FIG 14(a)

BEYOND THE DESKTOP

PAGER/CELL PHONE E-MAIL: | 4255555555@MOBILE.PHONECO.NET | ⟋980

NEW MAIL NOTIFICATION

☑ NOTIFY ME ABOUT NEW MAIL WHEN ITS PRIORITY IS GREATER THAN [85] AND WHEN I HAVE BEEN AWAY FROM MY COMPUTER FOR [75] MINUTES.

982

☑ ONLY BETWEEN [8:15 AM] AND [7:30 PM] 984

☑ ONLY NOTIFY ME DURING A MEETING IF PRIORITY IS OVER: [95] 986

EP 1 384 163 B1

**FIG 14(b)**

EP 1 384 163 B1

| FORWARD 1990 | CUSTOM REPLY 1992 |
|---|---|

**FORWARD E-MAIL**

☐ IF I'M AWAY FOR: [600] MINUTES, THEN FORWARD THE E-MAIL TO:

[ERIC@HOTMAIL.COM] FOR PRIORITY OVER: [600]

**FIG 14(c)**

1990

| FORWARD | CUSTOM REPLY |

1992

REPLY TO E-MAIL

☐ IF I'M AWAY FOR: [120] MINUTES AND PRIORITY IS OVER: [95] THEN REPLY TO

SENDER WITH THIS TEXT:

ERIC HAS BEEN OUT OF OFFICE IN MEETINGS QUITE A BIT TODAY. IF THIS IS TIME CRITICAL, YOU CAN REACH HIM BY CELL PHONE AT 425-555-5555.

EP 1 384 163 B1

FIG 14(d)

DESKTOP

## DESKTOP OPTIONS

LOW    2996 [75]    MEDIUM    2998 [90]    HIGH

0 ————————————————————— 100

| LOW | MEDIUM | HIGH |
|---|---|---|
| ☑ SOUND | ☑ SOUND | ☑ SOUND |
| ☐ PRIORITIES GETS FOCUS | ☑ PRIORITIES GETS FOCUS | ☑ PRIORITIES GETS FOCUS |
| ☐ OPEN MESSAGE | ☐ OPEN MESSAGE | ☑ OPEN MESSAGE |
| ☐ AGENT   2990 | ☐ AGENT   2992 | ☐ AGENT   2994 |

☑ IF PRIORITIES DETECTS THAT YOU ARE BUSY, IT WILL DEFER ALERTS UNLESS MESSAGE PRIORITY IS AT LEAST: [75] 2993

☑ SIZE MESSAGE ACCORDING TO PRIORITY (FOR OPEN MESSAGE). 2995

☑ MOVE MESSAGE TOWARD CENTER OF SCREEN ACCORDING TO PRIORITY (FOR OPEN MESSAGE). 2997

☐ USE CONTEXT-SENSITIVE THRESHOLD. 2991

EP 1 384 163 B1